Europäisches Patentamt

European Patent Office

Office européen des brevets

(11) Veröffentlichungsnummer: **0 422 317 A1**

# (12) EUROPÄISCHE PATENTANMELDUNG

(21) Anmeldenummer: 90100388.9

(22) Anmeldetag: 09.01.90

(51) Int. Cl.5: **G01F 1/42, G01F 1/68**

(30) Priorität: 13.10.89 DE 3934313

(43) Veröffentlichungstag der Anmeldung:
**17.04.91 Patentblatt 91/16**

(84) Benannte Vertragsstaaten:
**AT BE CH DE DK ES FR GB GR IT LI LU NL SE**

(71) Anmelder: **Preussag AG Feuerschutz
Industriestrasse 10-12
W-2060 Bad Oldesloe(DE)**

(72) Erfinder: **Schierau, Klaus, Dipl.-Ing.
Rosenweg 4
W-2411 Sandesneben(DE)**

(74) Vertreter: **Schaumburg, Thoenes &
Englaender
Mauerkircherstrasse 31 Postfach 86 07 48
W-8000 München 86(DE)**

(54) **Vorrichtung zum Bestimmen eines Fluidstromes durch eine Leitung.**

(57) Vorrichtung zum Bestimmen eines Fluidstromes durch eine Leitung (12) mit einer einen Wirkdruck erzeugenden Blendenanordnung (18), die mindestens einen Teil des Querschnitts der Leitung (12) ausfüllt, und mit einem Durchflußgeber (22), der ein dem Fluidstrom durch die Leitung (12) entsprechendes elektrisches Signal abgibt, dadurch **gekennzeichnet,** daß die Blendenanordnung (18) mehrere für das Medium durchlässige Öffnungen (19, 40 bis 54) hat, deren eine als Meßöffnung ausgebildet ist, in der der Durchflußgeber (22) angeordnet ist.

Fig. 1

# VORRICHTUNG ZUM BESTIMMEN EINES FLUIDSTROMES DURCH EINE LEITUNG

Die Neuerung betrifft eine Vorrichtung zum Bestimmen eines Fluidstromes durch eine Leitung mit einer einen Wirkdruck erzeugenden Blendenanordnung, die mindestens einen Teil des Querschnitts der Leitung ausfüllt, und mit einem Durchflußgeber, der ein dem Fluidstrom durch die Leitung entsprechendes elektrisches Signal abgibt.

Die Verwendungsmöglichkeiten einer derartigen bekannten Vorrichtung sind breit gefächert. So kann diese Vorrichtung als Strömungswächter dienen, der das Vorhandensein eines Gas- oder Flüssigkeitsstromes anzeigt. Weitere Anwendungen liegen in der meßtechnischen Bestimmung des Volumen- oder Mengenstromes oder des Massenstromes eihes Fluids.

Bei der Bestimmung des Fluidstromes nach dem Wirkdruckprinzip wird der Querschnitt der Fluidleitung an einer Stelle verengt, so daß das Fluid vor der Verengung einen höheren Druck als hinter der Verengung hat, jeweils in Flußrichtung des Fluidstromes gesehen. Die Differenz aus beiden Drücken wird als Wirkdruck bezeichnet. Die Verengung wird in den meisten Fällen durch eine Blendenanordnung hervorgerufen, die einen Teil des Querschnitts der Leitung ausfüllt. Als Blenden werden häufig dünne Scheiben verwendet, deren jeweilige Dicke klein gegen den Durchmesser der Leitung ist. Weitere bekannte Blendenanordnungen haben die Form einer Düse, mit einer sich verengenden Einlaßöffnung für das Fluid und mit einem sich daran anschließenden trichterförmig erweiternden Halsstück. Eine bekannte Düsenanordnung ist das Venturirohr.

Die bekannten Vorrichtungen verwenden als Durchflußgeber zumeist Druckmeßgeräte, die den von der Blendenanordnung hervorgerufenen Differenzdruck messen. Dieser ist ein Maß für den Durchfluß des Fluids durch die Leitung ist. Das Druckmeßgerät erzeugt ein elektrisches Signal, an Hand dessen nach Einmessen mit Fluidströmen bekannter Größe der aktuelle Fluidstrom durch die Leitung angegeben werden kann.

Um die gleichförmig Strömung des Fluids nicht zu stören - da derartige Störungen Wirbel verursachen und die Druckmessung verfälschen - wird der, Durchflußgeber außerhalb der Leitung angeordnet. Der Differenzdruck wird dem Geber über eigens dafür vorgesehene Meßleitungen zugeführt, die den Fluiddruck im Einlauf und im Auslauf der Blendenanordnung erfassen. Das Zusammenwirken von Meßleitungen, Durchflußgeber und Blendenanordnung bedingt einen komplizierten konstruktiven Aufbau der bekannten Vorrichtung zum Bestimmen des Fluidstroms, wobei auch außerhalb der Leitung Raum für Teile der Vorrichtung vorzusehen ist.

Dies führt zu Nachteilen einerseits bei der Fertigung einer solchen Vorrichtung und andererseits beim Einbau der Vorrichtung in die Leitung bei beengten Raumverhältnissen.

Es ist daher Aufgabe der Erfindung, eine neue Vorrichtung zum Bestimmen eines Fluidstromes anzugeben, die einfach herzustellen ist und einen geringen Raumbedarf hat.

Diese Aufgabe wird für eine Vorrichtung eingangs genannter Art dadurch gelöst, daß die Blendenanordnung mehrere für das Medium durchlässige Öffnungen hat, deren eine als Meßöffnung ausgebildet ist, in der der Durchflußgeber angeordnet ist.

Die durch die Blendenanordnung in der Leitung erzeugte Verengung läßt das Fluid im Bereich der Blende schneller fließen, d.h. es wird statische Druckenergie in dynamische Geschwindigkeitsenergie umgewandelt, wobei der Druck vor der Blendenanordnung, in Richtung des Fluidstroms gesehen, größer ist als hinter der Blendenanordnung. Dieser Druckunterschied führt zu Ausgleichsströmen. Das die Blendenanordnung durchströmende Fluid verteilt sich auf die verschiedenen Öffnungen. Eine dieser Öffnungen ist als Meßöffnung ausgebildet. In ihr ist der Durchflußgeber angeordnet.

Der durch die Meßöffnung fließende Fluidstrom hängt vom Verhältnis ihres Strömungswiderstandes zum Gesamtströmungswiderstand der Blendenanordnung ab. Der Gesamtwiderstand wiederum hängt von der Zahl der Öffnungen und deren Größe im Verhältnis zur Blendenfläche ab, die den Querschnitt der Leitung abdeckt. Aus der Geometrie der Blendenanordnung können die den Öffnungen entsprechenden Strömungswiderstände ermittelt werden. Damit ist es möglich aus dem durch die Meßöffnung fließenden Teilstrom auf den gesamten Fluidstrom in der Leitung zu schließen. Eine einfache Möglichkeit, aus dem Signal des Durchflußgebers den Fluidstrom zu bestimmen, ohne daß aufwendige geometrische Rechnungen anzustellen sind, ist durch die Kalibrierung gegeben. Hierbei wird in einem Einmeßvorgang der Vorrichtung ein Fluid mit einem bekannten Strom zugeführt und der Zusammenhang zwischen Strömungsgrößen und dem elektrischen Signal des Gebers in einer Kalibrierkennlinie festgelegt. Auf diese Kennlinie wird dann bei der Bestimmung von zu messenden Strömungsgrößen eines Fluids zurückgegriffen.

Durch Variieren der Geometrie der Blendenanordnung kann eine Anpassung an die Empfindlichkeit des Durchflußgebers vorgenommen werden, wobei die Aufteilung des Fluidstroms durch die Meßöffnung zum restlichen Fluidstrom verändert wird. Ferner kann durch Ändern der Blendengeometrie der von der Blendenanordnung insgesamt hervorgerufene Strömungswiderstand an den jeweiligen Anwendungsfall angepaßt werden, beispielsweise verringert oder erhöht werden.

Die Blendenanordnung hat einen sehr einfachen Aufbau. Sie kann bei einer zylindrischen Leitung beispielsweise die Form einer Scheibe haben, deren Durchmesser mit dem Innenmaß der Leitung übereinstimmt. Die Öffnungen werden durch kreisrunde Bohrungen gebildet. Die Scheibe kann an der Innenwand der Leitung durch Schrauben oder durch Verkleben befestigt sein. Hat die Fluidleitung einen rechteckförmigen Querschnitt, so kann es zweckmäßig sein , die Blendenanordnung ebenfalls rechteckförmig auszubilden. Die Herstellung derartiger Blenden ist sehr einfach und läßt sich mit geringem technischem Aufwand und damit wirtschaftlich durchführen.

Da der Durchflußgeber in die Blendenanordnung integriert ist, müssen an der Außenwand der Leitung keine weiteren mechanischen Teile vorgesehen werden, wie dies z.B. bei der bekannten Vorrichtung erforderlich ist. Dadurch kann die Vorrichtung nach der Erfindung auch unter räumlich beengten Umgebungsbedingungen eingesetzt werden, da ihr Raumbedarf nicht über die Abmessungen der Fluidleitung hinausgeht.

Als Durchflußgeber können die bekannten Druckdifferenzmeßgeräte verwendet werden, welche den von der Blendenanordnung hervorgerufenen Wirkdruck zum Bestimmen der Fluidströmung auswerten. Es können aber auch andere Geber eingesetzt werden, die nach anderen Meßprinzipien arbeiten. Beispielsweise kommen Temperaturfühler, induktive Durchflußfühler, Zählräder etc. in Frage. Die Auswahl des jeweils zweckmäßigen Durchflußgebers richtet sich nach der jeweiligen Anwendung, beispielsweise nach Art des Fluids, d.h. ob der Durchfluß von Gasen oder Flüssigkeiten zu bestimmen ist, nach der Temperatur, dem Druck oder der Viskosität des Fluids.

Bei einem bevorzugtem Ausführungsbeispiel nach der Neuerung ist die Meßöffnung in Flußrichtung des Fluids durch eine Zusatzleitung verlängert, in der der Durchflußgeber angeordnet ist. Die Blendenanordnung bildet für den Fluidstrom ein Hindernis, welches Strömungswirbel erzeugt. Eine ursprünglich laminare Strömung kann in eine turbulente Strömung umschlagen. Die Strömungswirbel können das Meßergebnis bei der Bestimmung der Strömung durch die Meßöffnung verfälschen. Durch die genannten Maßnahmen werden die Strömungswirbel in der Meßöffnung und längs der Zusatzleitung geglättet und dem Durchflußgeber eine weitgehend laminare Strömung zugeführt.

Weitere vorteilhafte Ausgestaltungen der Erfindung werden im folgenden an Hand eines Ausführungsbeispieles beschrieben, wobei auf die Zeichnung Bezug genommen wird. Darin zeigt:

Fig. 1 die Anordnung der Vorrichtung nach der Neuerung im Ansaugrohr eines Gasüberwachungsgerätes in einer schematischen Blockdarstellung,

Fig. 2 einen Querschnitt durch die Vorrichtung zum Bestimmen des Fluidstromes, und

Fig.3 eine vergrößerte Darstellung der Vorderansicht der Blendenanordnung nach Fig. 2.

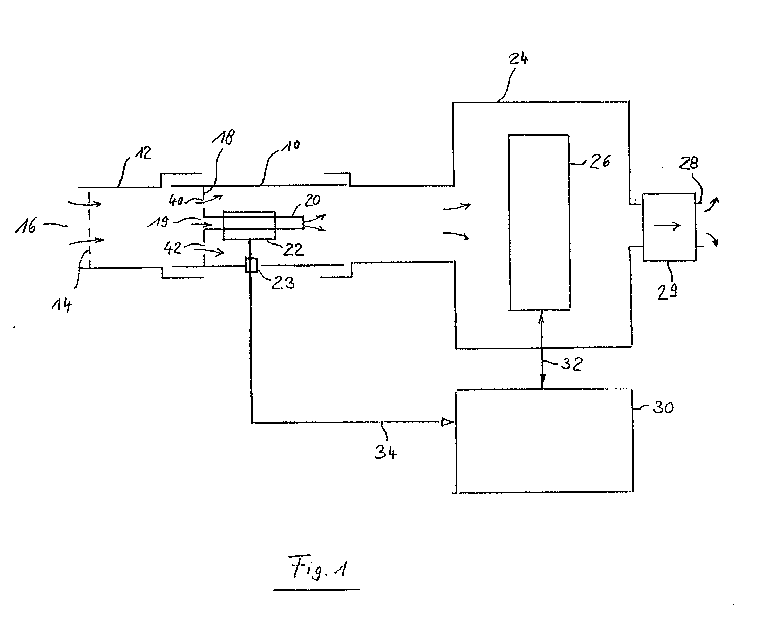

In Fig. 1 ist eine Einrichtung zum Feststellen der Zusammensetzung eines Gasgemisches dargestellt, die die Vorrichtung nach der Neuerung verwendet. Über ein Ansaugrohr 12 wird der zu überwachenden Umgebungsluft eine Luftprobe 16 entnommen. Der hierzu erforderliche Unterdruck wird durch eine Ansaugpumpe 29 erzeugt. Die angesaugte Luft wird durch ein Filtergitter 14 gefiltert, das sich infolge Verschmutzung im Laufe der Betriebszeit zusetzen kann. Um das Vorhandensein der Luftströmung festzustellen, wird in die Ansaugleitung 12 ein Rohrstück 10 eingefügt, das mehrere Öffnungen 19, 40, 42, hat. Eine dieser Öffnungen ist als Meßöffnung 19 ausgebildet, die durch eine Zusatzleitung 20 verlängert ist.

Die durch die Zusatzleitung 20 fließende Luftströmung wird von einem hitzdrahtdurchflußmesser 22 bestimmt, die gemessene mechanische Größe in ein elektrisches Signal gewandelt, das über eine Leitung 34 an eine Auswertungseinheit 30 abgegeben wird. Die Leitung 34 wird vom Durchflußmesser 22 durch eine luftdichte Durchführung 23 nach außen geführt.

Die angesaugte Luft gelangt in eine Meßkammer 24, in der ein Gasdetektor 26 angeordnet ist, der die Gasanalyse durchführt. Das Ergebnis der Analyse wird als elektrisches Signal über die Leitung 32 an die Auswertungseinheit 30 weitergegeben. Die Einrichtung arbeitet kontinuierlich, d.h. der Ansaugmotor 29 saugt fortlaufend Luft an und gibt diese über eine Austrittsöffnung 28 wieder an die Umgebung ab.

Die Auswertungseinheit wertet das vom Hitzdrahtdurchflußmesser 22 abgegebene Signal aus und stellt fest, ob eine für den Zweck der Gasanalyse ausreichende Luftströmung vorhanden ist. Ist diese unterbrochen, beispielsweise infolge eines Verstopfens des Ansaugfilters 14 oder infolge eines Ausfalls der Ansaugpumpe 29, so gibt sie ein Alarmsignal ab, da die fortlaufende Gasüberwachung nicht mehr gewährleistet ist.

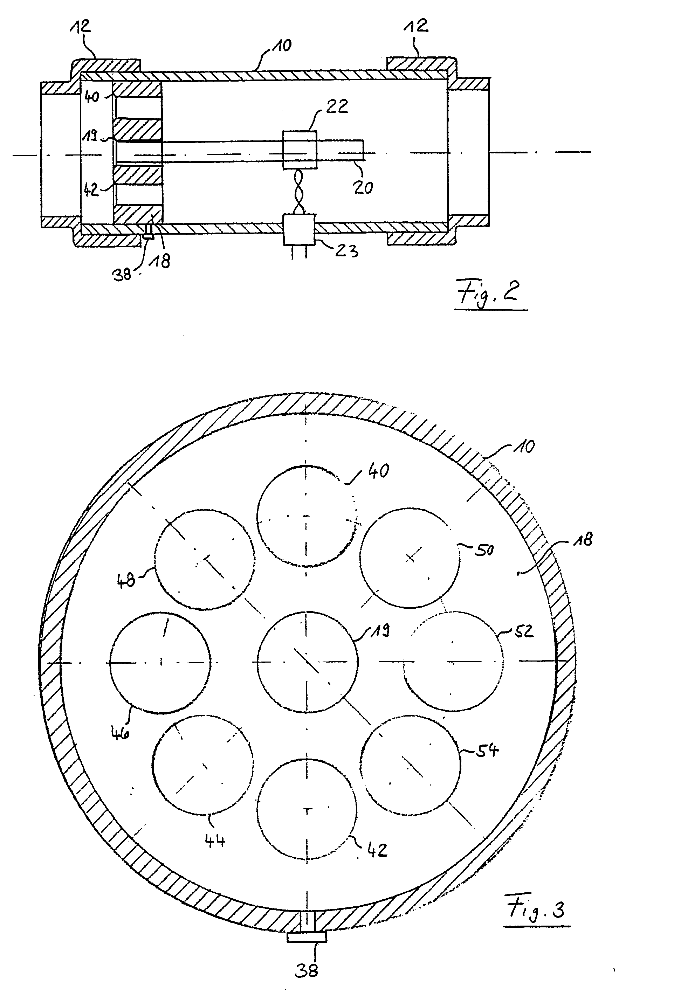

In der Fig. 2 ist ein Längsquerschnitt durch einen Teil des Ansaugrohres 12 und des Rohrstutzens 10 nach der Fig. 1 dargestellt. Die Blendenanordnung 18 ist im Rohrstutzen 10 durch eine Feststellschraube 38 befestigt. Die Blendenöffnungen 19, 40, 42 sind trichterförmig angeschrägt, so daß der ankommenden Luftströmung ein geringer Strömungswiderstand entgegengesetzt wird und die Verwirbelung der Strömung durch scharfe Kanten vermieden wird.

Der Hitzdrahtdurchflußmesser 22 enthält einen elektrisch beheizten Meßdraht, dessen Temperatur von der Strömungsgeschwindigkeit der Luft in der Zusatzleitung 20 abhängt. Je größer diese Geschwindigkeit ist, desto geringer ist die Temperatur des Meßdrahts bei einer gleichbleiben zugeführten elektrischen Leistung. Die Temperatur des Meßdrahts kann indirekt durch seinen elektrischen Widerstand bestimmt werden. Durch Auswerten dieses Widerstandswertes kann festgestellt werden, ob im Rohrstück 10 ein Luftstrom fließt oder nicht.

Ein Querschnitt durch die Blendenanordnung 18 und durch das Rohrstück 10 ist in der Fig. 3 vergrößert dargestellt. Die Blendenanordnung 18 füllt den gesamten Querschnitt des Rohrstücks 10 aus und hat gleich große Öffnungen 19, 40 bis 54. Diese Öffnungen können z.B. durch Bohren hergestellt werden. Die Meßöffnung 19 ist mittig zur Blendenanordnung 18 angeordnet. Die Blendenanordnung wird durch die Feststellschraube 38 im Rohrstück 10 fixiert. Nach dem Lösen dieser Verbindung kann die Blendenanordnung 18 längs des Rohrstücks 10 verschoben und an anderer Stelle befestigt werden.

Wie an Hand dieses Ausführungsbeispiels leicht zu sehen ist, benötigt die Vorrichtung nach der Neuerung außerhalb der Leitungsabmessungen, die im wesentlichen duch den Durchmesser des Ansaugrohrs 12 bestimmt sind, minimalen zusätzlichen Raum. Dadurch wird es möglich, diese Vorrichtung auch bei sehr beengten Raumverhältnissen einzusetzten. Durch die Einbeziehung des Durchflußgebers 22 in das Innere des Rohrstücks 10 ist er von äußeren Störeinflüssen geschützt und lediglich den im allgemeinen eindeutig definierten Zustandsbedingungen des Fluids ausgesetzt. Daraus resultiert eine hohe Zuverlässigkeit der Vorrichtung im praktischen Einsatz.

## Ansprüche

1. Vorrichtung zum Bestimmen eines Fluidstromes durch eine Leitung mit einer einen Wirkdruck erzeugenden Blendenanordnung, die mindestens einen Teil des Querschnitts der Leitung ausfüllt, und mit einem Durchflußgeber, der ein dem Fluidstrom durch die Leitung entsprechendes elektrisches Signal abgibt, dadurch **gekennzeichnet,** daß die Blendenanordnung (18) mehrere für das Medium durchlässige Öffnungen (19, 40 bis 54) hat, deren eine als Meßöffnung (19) ausgebildet ist, in der der Durchflußgeber (22) angeordnet ist.

2. Vorrichtung nach Anspruch 1, dadurch **gekenn-** zeichnet, daß die Meßöffnung (19) in Flußrichtung des Fluids durch eine Zusatzleitung (20) verlängert ist, in der der Durchflußgeber (22) angeordnet ist.

3. Vorrichtung nach Anspruch 1 oder 2, dadurch **gekennzeichnet,** daß die Blendenanordnung (18) den gesamten Querschnitt der Leitung (10) ausfüllt.

4. Vorrichtung nach Anspruch 1, 2 oder 3, dadurch **gekennzeichnet,** daß die Meßöffnung (19) mittig zur Blendenanordnung (18) angeordnet ist.

5. Vorrichtung nach einem der Ansprüche 1 bis 4, dadurch **gekennzeichnet,** daß die Öffnungen (19, 40 bis 54) in der Blendenanordnung (18) gleich groß sind.

6. Vorrichtung nach einem der vorhergehenden Ansprüche, dadurch **gekennzeichnet,** daß die Öffnungen (19, 40 bis 54) einen kreisförmigen Querschnitt haben.

7. Vorrichtung nach einem der vorhergehenden Ansprüche, dadurch **gekennzeichnet,** daß die Blendenanordnung (18) in einem Rohrstück (10) angeordnet ist, das in die Fluidleitung (12) einfügbar ist.

8. Vorrichtung nach einem der vorhergehenden Ansprüche, dadurch **gekennzeichnet,** daß als Durchflußgeber ein Hitzdrahtdurchflußmesser (22) vorgesehen ist.

Fig. 1

EP 0 422 317 A1

_Fig. 2_

_Fig. 3_

Europäisches
Patentamt

# EUROPÄISCHER RECHERCHENBERICHT

Nummer der Anmeldung

## EP 90 10 0388

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 118 973 (H.G. TUCKER) <br> * Spalte 18, Zeilen 19 - 68 ** Spalte 19, Zeilen 48 - 64; Figuren 17, 18, 21 * <br> − − − | 1,3,4,5,8 | G 01 F 1/42 <br> G 01 F 1/68 |
| Y | US-A-4 856 328 (S.D. JOHNSON) <br> * Spalte 4, Zeilen 1 - 11; Figur 4 * <br> − − − | 1,3,4,5,8 | |
| A | DE-A-2 750 507 (ESCHER WYSS GMBH) <br> * Seite 8, Absatz 4 - Seite 9, Absatz 1; Figuren 2, 3 * <br> − − − | 1 | |
| A | GB-A-1 476 147 (A.C. WILSON) <br> * Seite 2, Zeilen 8 - 26; Figuren 1-4 * <br> − − − | 1 | |
| A | FR-A-2 408 121 (BOSCH) <br> * Seite 2, Zeilen 8 - 34; Figur 1 * <br> − − − − − | 1 | |

| | | | RECHERCHIERTE SACHGEBIETE (Int. Cl.5) |
|---|---|---|---|
| | | | G 01 F |

Der vorliegende Recherchenbericht wurde für alle Patentansprüche erstellt

| Recherchenort | Abschlußdatum der Recherche | Prüfer |
|---|---|---|
| Den Haag | 29 Januar 91 | HEINSIUS R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument